# EUROPÄISCHE PATENTSCHRIFT

(11) **EP 4 474 826 B1**
(45) Veröffentlichungstag und Bekanntmachung des Hinweises auf die Patenterteilung: **04.11.2026**
(21) Anmeldenummer: 23178093.3
(22) Anmeldetag: 07.06.2023
(51) Int. Cl.: G01N 35/00, B25J 9/16, G01N 35/04

(54) **IN-VITRO-DIAGNOSTISCHE LABOR-ANORDNUNG MIT ANALYSEGERÄTEN UND EINEM HANDHABUNGSROBOTER MIT WENIGSTENS ZWEI GREIFARMEN UND EINEM TISCH MIT EINER ABLAGEFLÄCHE**
IN VITRO DIAGNOSTIC LABORATORY ARRANGEMENT WITH ANALYZERS AND A HANDLING ROBOT HAVING AT LEAST TWO GRIPPER ARMS AND A TABLE HAVING A STORAGE SURFACE
ENSEMBLE DE LABORATOIRE DE DIAGNOSTIC IN VITRO COMPRENANT DES ANALYSEURS ET UN ROBOT MANIPULATEUR COMPORTANT AU MOINS DEUX BRAS DE PRÉHENSION ET UNE TABLE DOTÉE D'UNE SURFACE DE RANGEMENT

(43) Veröffentlichungstag der Anmeldung: 11.12.2024
(73) Patentinhaber: MVZ Medizinische Labore Dessau Kassel GmbH, 06847 Dessau (DE)
(72) Erfinder: Böttcher-Lorenz, Juliane, 22395 Hamburg (DE); Meßbauer, Bodo, 39128 Magdeburg (DE)
(74) Vertreter: Zenz Patentanwälte Partnerschaft mbB

(56) Entgegenhaltungen:
- DE-U1- 202022 103 719
- US-A1- 2021 094 184

## Beschreibung

Die Erfindung betrifft eine in-vitro-diagnostische LaborAnordnung mit wenigstens zwei Analysegeräten und wenigstens einem Handhabungsroboter zum Handhaben von Proben und/oder Reagenzien enthaltenden Behältnissen und/oder Aufnahmevorrichtungen für solche Behältnisse und zur Übergabe der Behältnisse und/oder Aufnahmevorrichtungen an die Analysegeräte und Entgegennahme der Behältnisse und/oder Aufnahmevorrichtungen von den Analysegeräten, wobei die Analysegeräte und der Handhabungsroboter ortsfest und beabstandet voneinander angeordnet sind, wobei der Handhabungsroboter einen ersten Greifarm, eine Steuereinrichtung und eine mit der Steuereinrichtung gekoppelte Identifikationseinrichtung zum Erfassen von Identifikationsinformationen der Behältnisse aufweist.

Eine derartige vollautomatische in-vitro-diagnostische Labor-Anordnung ist beispielsweise aus der DE 10 2021 114 970 A1 bekannt. Die bekannte in-vitro-diagnostische Labor-Anordnung umfasst zwei oder mehr Analysegeräte, auf die ein als Pick-and-Place-Roboter ausgeführter Handhabungsroboter zum Handhaben von Proben-Behältnissen und zur Übergabe der Proben-Behältnisse an die Analysegeräte zugreifen kann. Ferner umfasst die bekannte Anordnung eine Übergabestation mit einer Ablagefläche für Aufnahmevorrichtungen für Proben-Behältnisse, auf die der Handhabungsroboter zugreifen kann. Die Ablagefläche der Übergabestation ist benachbart zu einem Durchreiche-Fenster angeordnet, wobei eine Bedienperson die Aufnahmevorrichtungen mit Proben-Behältnissen durch das Fenster hindurch auf die Ablagefläche abstellen kann. Ein Detektor erfasst dabei die Präsenz der Hand des Bedieners. Dann steuert eine Steuereinrichtung den Handhabungsroboter derart, dass er sich von der Übergabestation fernhält. Die Labor-Anordnung ist umhaust, das heißt, sie ist derart von Wandungen oder Absperrungen umgeben, dass die Raumbereiche in Reichweite des Pick-and-Place-Roboters, insbesondere die Raumbereiche zwischen dem Handhabungsroboter und den Analysegeräten sowie der Übergabestation nicht zugänglich sind, so dass es einer Bedienperson nicht möglich ist, ein Analysegerät direkt zu beschicken oder Proben-Behältnisse dort zu entnehmen. Sofern eine Person diese Raumbereiche in Reichweite des Roboters betritt, wird dies von Sensoren erfasst und die Bewegung des Roboters gestoppt, um Unfälle zu vermeiden. Die bekannte in-vitro-diagnostische Labor-Anordnung gestattet eine Übergabe von Proben-Behältnissen an die Analysegeräte ausschließlich durch den Handhabungsroboter. Dadurch ist es nicht möglich, dass freie Aufnahmekapazitäten eines Analysegeräts durch eine parallele manuelle Eingabe durch einen Bediener ausgenutzt werden können. Die bekannte Anordnung ist, abgesehen vom Zuführen der Proben am Fenster der Übergabestation, für Abläufe ohne Eingriff des Laborpersonals vorgesehen, was dazu führt, dass die eingebundenen Analysegeräte in den Laborbetriebszeiten, in denen Personal zur Verfügung steht, unzureichend ausgelastet sein können.

Daneben sind aus dem Stand der Technik mobile Roboter bekannt, die sich in demselben Raum bewegen können, in dem sich auch Bedienpersonen bewegen und die Bedienpersonen beim Beschicken von Analysegeräten mit Proben-Behältnissen und beim Versorgen der Analysegeräte mit Verbrauchsmaterialien und Reagenzien unterstützen können.

So offenbart die US 2021/0094184 A1 im Bereich der Biowissenschaften verwendete Laboranordnungen. Es wird vorgeschlagen, selbst-navigierende mobile Verarbeitungsroboter einzusetzen, die an die Labor-Verarbeitungsstationen heranfahren können, um an diese Verarbeitungsstationen Proben-Behältnis zu übergeben und die Verarbeitungsstationen mit Ausrüstungen und Verbrauchsmaterial zu versorgen oder zu reinigen und Abfälle zu entsorgen. Die mobilen Verarbeitungsroboter können darüber hinaus beispielsweise eine Versiegelungsfolie von einer Probe und/oder einem Tray entfernen, eine Identifikation einer Probe lesen, Flüssigkeiten pipettieren und/oder Röhrchen verschließen und öffnen. Bei einer Ausführungsform wird ein paralleles Arbeiten einer Bedienperson und wenigstens eines kollaborativen selbst-navigierenden mobilen Roboters in einer gemeinsamen Zugriffszone ermöglicht. Dazu sind die Greifarme des Roboters mit Sensoren ausgerüstet, um eine Kollision mit Bedienern der Verarbeitungsstationen zu vermeiden. Die Sensoren erfassen Hindernisse und Bediener im Umfeld des Roboter-Greifarms, indem die Sensorsignale beispielsweise von einem neuronalen Netzwerk verarbeitet werden, und die Steuereinrichtung steuert den Roboterarm derart, dass eine Kollision vermieden wird, indem beispielsweise die Bewegung des Roboter-Greifarms verlangsamt oder angehalten wird.

Ein anderer mobiler Laborassistenzroboter für eine in-vitro-diagnostische Laboranordnung ist in der DE 20 2022 103 719 U1 oder der EP 4 140 661 A1 beschrieben. Auch hier kann der Assistenzroboter Aufgaben direkt am Laboranalysegerät ausführen, wie beispielsweise das Beladen und Entladen der Proben und Reagenzien, das Bedienen der Laboranalysegeräte (z.B. Öffnen einer Schublade), die Proben-Archivierung, das Entleeren des Mülls, das Management der Verbrauchsmaterialien und die Probenvorbereitung (z.B. Öffnen von Proben-Behältnissen). Der mobile Assistenzroboter kann einen Ablagebereich für zu transportierende Proben und Reagenzien aufweisen, der auch gekühlt sein kann. Eine Kollision des Assistenzroboters mit einem Bediener soll durch den Einsatz von Sensoren zur Umgebungserkennung und einer Steuereinrichtung mit Navigationseinheit und Identifikationseinheit zum Identifizieren der Objekte vermieden werden.

Nachteilig bei dem aus den genannten Druckschriften bekannten Prinzip der mobilen kollaborativen Roboter sind der sehr hohe Aufwand bei der Sensorik und der Steuerung des Roboterfahrzeugs und der Greifarme und die damit verbundenen Kosten.

Der Erfindung liegt die Aufgabe zugrunde, eine einfache, das heißt weniger kostenintensive kollaborative in-vitro-diagnostische Labor-Anordnung zu schaffen, die die Flexibilität und den Gesamtdurchsatz bei besserer Auslastung der Analysegeräte erhöht.

Diese Aufgabe wird erfindungsgemäß durch eine in-vitro-diagnostische Labor-Anordnung mit den Merkmalen des Anspruchs 1 gelöst.

Erfindungsgemäß ist die eingangs genannte in-vitro-diagnostische Labor-Anordnung dadurch gekennzeichnet, dass der Handhabungsroboter einen wenigstens eine Ablagefläche zur Ablage der Behältnisse und/oder Aufnahmevorrichtungen aufweisenden Tisch umfasst. Die wenigstens eine Ablagefläche des Tisches ist vorzugsweise in einer horizontalen Ebene angeordnet; es sind aber auch Ablageflächen in mehreren horizontalen Ebenen denkbar. Die wenigstens eine Ablagefläche umfasst zumindest einen Probeneingangsbereich zur Ablage von Proben enthaltenden Behältnissen und/oder Aufnahmevorrichtungen und einen Pufferbereich zur Ablage von in die Analysegeräte einsetzbaren Aufnahmevorrichtungen (beispielsweise als Racks oder Trays bezeichnet) für Proben enthaltende Behältnisse. Zwischen dem Handhabungsroboter und den Analysegeräten ist eine Gasse ausgebildet. Der erste Greifarm des Handhabungsroboters weist einen ersten Zugriffsbereich derart auf, dass er zur Übergabe von Behältnissen und/oder Aufnahmevorrichtungen an die Analysegeräte beziehungsweise zur Entgegennahme von Behältnissen und/oder Aufnahmevorrichtungen von den Analysegeräten die Gasse übergreifen kann. Die Gasse ist derart breit, dass sich eine Bedienperson in der Gasse bewegen und dabei manuell Proben und/oder Reagenzien enthaltende Behältnisse und/oder Aufnahmevorrichtungen den Analysegeräten zuführen und/oder aus den Analysegeräten entnehmen kann. Der Handhabungsroboter weist wenigstens einen zweiten Greifarm mit einem zweiten Zugriffsbereich auf, wobei sich der erste Zugriffsbereich des wenigstens einen ersten Greifarms und der zweite Zugriffsbereich des wenigstens einen zweiten Greifarms in einem Überlappungsbereich über der Ablagefläche des Tisches überlappen. Bei Ausführungsformen mit mehr als zwei Greifarmen kann der Überlappungsbereich mehrere räumlich getrennte Bereiche umfassen. In dem Überlappungsbereich ist der Pufferbereich angeordnet. Dies ermöglicht die Übergabe der Behältnisse zwischen den ersten und zweiten Greifarmen. Der Probeneingangsbereich ist in dem zweiten Zugriffsbereich angeordnet. Der Probeneingangsbereich kann beispielsweise für eine manuelle Ablage durch einen Bediener und/oder für eine Probenzufuhr über automatisierte Transportvorrichtungen (z.B. eine Rutsche oder ein Förderband) konfiguriert sein. Der wenigstens eine zweite Greifarm ist primär für die Handhabung der eingehenden Proben, vorzugsweise einschließlich der Handhabung der Behältnisse bei präanalytischen Schritten vorgesehen. Die in-vitro-diagnostische Labor-Anordnung weist eine Sensoranordnung auf, die so ausgebildet ist, dass sie ein Eindringen einer Bedienperson oder eines anderen Objekts in die Zugriffsbereiche der Greifarme erfassen und dies anzeigende Sensorsignale an die Steuereinrichtung übermitteln kann, wobei die Steuereinrichtung so ausgebildet ist, dass sie dann, wenn die Sensorsignale ein Eindringen einer Bedienperson oder eines anderen Objekts in einen Zugriffsbereich eines Greifarms anzeigen, den zugehörigen Greifarm derart ansteuert, dass er die Bewegung einstellt, solange die Bedienperson oder das Objekt seinen zugehörigen Zugriffsbereich nicht verlassen hat. Die Sensoranordnung umfasst beispielsweise mehrere optische Sensoren oder Kameras und zugehörige Auswerteschaltungsanordnungen.

Diese erfindungsgemäße Labor-Anordnung gestattet einen höheren Durchsatz, weil aufgrund der Begehbarkeit der zwischen dem Handhabungsroboter und den Analysegeräten gebildeten breiteren Gasse freie Aufnahmekapazitäten der Analysegeräte durch eine parallele manuelle Eingabe durch einen Bediener während des laufenden Betriebs des Handhabungsroboters ausgenutzt werden können und weil aufgrund des Vorsehens einer Aufgabenteilung zwischen ersten und zweiten Greifarmen mit einem Überlappungsbereich ihrer Zugriffsbereiche und der Ausbildung des Tischs mit einer einen Probeneingangsbereich aufweisenden Ablagefläche von einem zweiten Greifarm präanalytische Aufgaben über dem Tisch ausgeführt werden können, während ein erster Greifarm für die Übergabe an die Analysegeräte über die Gasse hinweg sorgt. Auch ist es möglich, vorübergehend eines der Analysegeräte manuell mit Proben zu beladen, während ein anderes Analysegerät von einem Greifarm des Handhabungsroboter beladen wird. Die erfindungsgemäße Labor-Anordnung ist in der Lage, wesentliche Teile des gesamten prä-, peri- und post-analytischen Prozesses eines medizinischen in-vitro-diagnostischen Labors abzubilden.

Eine bevorzugte Ausführungsform der in-vitro-diagnostischen Labor-Anordnung ist dadurch gekennzeichnet, dass die Steuereinrichtung dann, wenn die Sensorsignale ein Eindringen einer Bedienperson oder eines anderen Objekts in einen Zugriffsbereich eines Greifarms anzeigen, den oder die übrigen Greifarme derart ansteuert, dass sie ihre Bewegungen verlangsamen, solange sich die Bedienperson oder das Objekt noch in wenigstens einem der Zugriffsbereiche befindet. Dies sorgt für eine höhere Betriebssicherheit und gestattet eine schnelleres Reagieren auf eine mögliche Weiterbewegung der Bedienperson in weitere Zugriffsbereiche hinein.

Eine andere bevorzugte Weiterbildung der in-vitro-diagnostischen Labor-Anordnung ist dadurch gekennzeichnet, dass die Sensoranordnung zusätzlich eine Annäherung einer Bedienperson oder eines anderen Objekts an die Zugriffsbereiche der Greifarme erfassen und dies anzeigende Sensorsignale an die Steuereinrichtung übermitteln kann, wobei die Steuereinrichtung dann, wenn die Sensorsignale ein vorgegebenes Maß der Annäherung einer Bedienperson oder eines anderen Objekts an einen Zugriffsbereich eines Greifarms, aber noch kein Eindringen in einen Zugriffsbereich anzeigen, den zugehörigen Greifarm oder sämtliche Greifarme derart ansteuert, dass sie die Bewegung verlangsamen, bis sich die Bedienperson oder das Objekt wieder um einen vorgegebenen Mindestabstand von sämtlichen Zugriffsbereichen entfernt hat. Auch dies sorgt für eine höhere Betriebssicherheit und gestattet eine schnelleres Abbremsen der Bewegung des Greifarms, sobald sich die Bedienperson in Zugriffsbereiche hineinbewegt.

Bei einer besonders bevorzugten Weiterbildung der erfindungsgemäßen in-vitro-diagnostischen Labor-Anordnung umfassen die Proben Untersuchungsmaterialproben und Kontrollproben und weist der Handhabungsroboter wenigstens eine Aufnahmevorrichtung zur Aufnahme der Kontrollproben auf, wobei die wenigstens eine Aufnahmevorrichtung zur Aufnahme der Kontrollproben mit einer ersten Kühlvorrichtung gekoppelt ist, so dass die in der wenigstens einen Aufnahmevorrichtung gelagerten Kontrollproben in wenigstens einem vorgegebenen Temperaturbereich gekühlt gelagert werden können. Hierbei ist die wenigstens eine Aufnahmevorrichtung zur Aufnahme der Kontrollproben mit der erste Kühlvorrichtung vorzugsweise auf der Ablagefläche des Tisches angeordnet. Das Vorhalten von Kontrollproben in gekühlten Bereichen des Tisches des Handhabungsroboters gestattet einen Dauerbetrieb der LaborAnordnung und die automatische Zwischenschaltung regelmäßiger Kontrollanalysen ohne Betriebsunterbrechung und somit wiederum einen höheren Gesamtdurchsatz.

Bei einer weiteren bevorzugten Ausführungsform der in-vitro-diagnostischen Labor-Anordnung umfasst der Handhabungsroboter wenigstens eine Aufnahmevorrichtung zur Aufnahme von an eine externe Labor-Anordnung auszugebenden Untersuchungsmaterialproben, wobei die wenigstens eine Aufnahmevorrichtung zur Aufnahme von auszugebenden Untersuchungsmaterialproben mit einer zweiten Kühlvorrichtung gekoppelt ist, so dass die in der wenigstens einen Aufnahmevorrichtung gelagerten auszugebenden Untersuchungsmaterialproben in wenigstens einem vorgegebenen Temperaturbereich gekühlt gelagert werden können. Dabei ist die wenigstens eine Aufnahmevorrichtung zur Aufnahme von auszugebenden Untersuchungsmaterialproben vorzugsweise auf der Ablagefläche des Tisches angeordnet. Bei einer Weiterbildung dieser Ausführungsform ist die wenigstens eine Aufnahmevorrichtung zur Aufnahme von auszugebenden Untersuchungsmaterialproben in einem Archivbereich auf der Ablagefläche des Tisches angeordnet ist, wobei sich der Archivbereich in dem Überlappungsbereich der Zugriffsbereiche des wenigstens einen ersten Greifarms und des wenigstens einen zweiten Greifarms befindet.

Bei dieser vorgenannten bevorzugten Ausführungsform können Untersuchungsmaterialproben, die nach einer präanalytischen Behandlung an eine externe Labor-Anordnung auszugeben sind (weil sie nicht von den Analysegeräten der Labor-Anordnung analysiert werden können), für eine verlängerte Dauer gelagert werden, was eine gesammelte Ausgabe ermöglicht und somit zu weniger Unterbrechungen der Betriebsabläufe führt und ebenfalls den Gesamtdurchsatz erhöht.

Ein weiteres bevorzugtes Ausführungsbeispiel der in-vitro-diagnostischen Labor-Anordnung ist dadurch gekennzeichnet, dass auf dem Tisch wenigstens eine von einem Greifarm bedienbare und/oder wenigstens eine autonom arbeitende Pipettierstation angeordnet ist. Die Pipettierstation erweitert die Möglichkeiten der präanalytischen Probenbehandlung innerhalb des den Tisch umfassenden Handhabungsroboters. So können von eingehenden Proben Teilproben (Aliquots) hergestellt werden, die dann parallel oder nacheinander unterschiedlichen Analysen zugeführt werden können.

Vorzugsweise umfasst bei diesem Ausführungsbeispiel die Ablagefläche des Tisches eine Ablagefläche mit wenigstens einer Aufnahmevorrichtung zur Aufnahme von mittels der Pipettierstation befüllten Behältnissen, wobei die Aufnahmevorrichtung zur Aufnahme von mittels der Pipettierstation befüllten Behältnissen eine dritte Kühlvorrichtung derart aufweist, dass die in der Aufnahmevorrichtung gelagerten Behältnisse in wenigstens einem vorgegebenen Temperaturbereich gekühlt gelagert werden können. Die Kühlmöglichkeit erweitert die Möglichkeiten der Analyse der hergestellten Aliquots.

Vorzugsweise weist die Identifikationseinrichtung des Handhabungsroboters der in-vitro-diagnostischen Labor-Anordnung eine Vorrichtung zum Erfassen von Eigenschaften von Verschlüssen der Behältnisse und/oder zum Erfassen eines Volumens der in den Behältnissen enthaltenen Proben auf. Auf diese Weise kann nicht nur die auf den Behältnissen aufgebrachte Identifikation (z.B. Barcode oder QR-Code) erfasst und geprüft werden; es ist auch eine Erfassung von Farbe und Form der Verschlüsse (z.B. Behältnis-Kappen) und deren Prüfung sowie eine Prüfung des Füllstands innerhalb der Behältnisse (z.B. Röhrchen) möglich und somit eine Fehlererkennung.

Eine andere bevorzugte Weiterbildung der erfindungsgemäßen in-vitro-diagnostischen Labor-Anordnung ist dadurch gekennzeichnet, dass wenigstens einer der Greifarme des Handhabungsroboters mit einer Vorrichtung zum Entfernen von Verschlüssen von den Behältnissen und/oder mit einer Vorrichtung zum Wieder-Aufsetzen von Verschlüssen auf die Behältnisse koppelbar ist. Bei dieser Ausführungsform der in-vitro-diagnostischen Labor-Anordnung kann vorzugsweise die Vorrichtung zum Entfernen von Verschlüssen von den Behältnissen und/oder die Vorrichtung zum Wieder-Aufsetzen von Verschlüssen auf die Behältnisse an einem der Greifarme befestigt und mit diesem zu in einer Haltevorrichtung zum Halten von Behältnissen bewegt werden, wobei die Haltevorrichtung auf dem Tisch angeordnet ist. Auch dies erweitert die Möglichkeiten der Prä- und Post-Analytik und gestattet die Entnahme von Proben oder Anteilen der Proben und deren Aufteilung in Teilproben.

Bei weiteren Ausführungsformen der in-vitro-diagnostischen Labor-Anordnung kann der Handhabungsroboter weitere Vorrichtungen auf und/oder unter der Oberfläche des Tisches aufweisen, wie beispielsweise
- eine Greifer-Wechselstation, in der Greifer-Werkzeuge für unterschiedliche Funktionen, wie dem Greifen unterschiedlicher Behältnisse oder Aufnahmevorrichtungen, dem Abschrauben von Kappen oder dem Pipettieren, gelagert, an einem Greifarm befestigt oder von dem Greifarm wieder abgenommen werden können,
   und/oder
- eine Zentrifuge mit Aufnahmen für Proben-Behältnisse und/oder Zentrifugen-Becher
   und/oder
- eine Etikettier- und/oder Druckstation, mit deren Hilfe Proben-Behältnisse mit geänderten oder neuen Identifikationsinformationen versehenen werden können.

Vorteilhafte und/oder bevorzugte Weiterbildungen der Erfindung sind in den Unteransprüchen gekennzeichnet.

Nachfolgend wird die Erfindung anhand eines in den Zeichnungen dargestellten bevorzugten Ausführungsbeispiels näher beschrieben, wobei in den Zeichnungen
Figur 1 eine schematische Draufsicht auf das bevorzugte Ausführungsbeispiel der in-vitro-diagnostischen Labor-Anordnung und
Figur 2 eine schematische Seitenansicht des Handhabungsroboters der in-vitro-diagnostischen Labor-Anordnung gemäß Figur 1 zeigt.

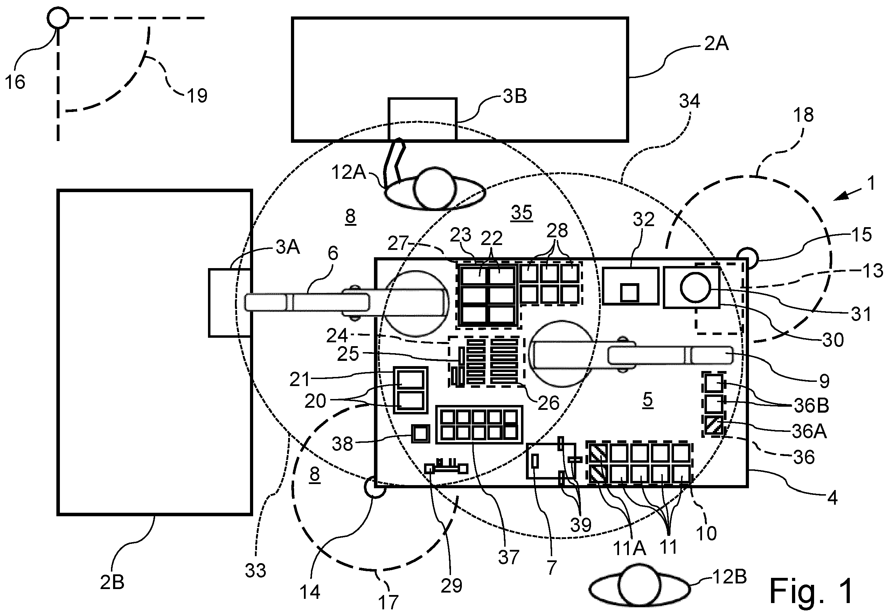

Die in Figur 1 schematisch gezeigte erfindungsgemäße in-vitro-diagnostischen Labor-Anordnung umfasst beispielsweise zwei Analysegeräte 2A und 2B und einen Handhabungsroboter 1. Bei anderen Ausführungsformen können auch drei oder mehr Analysegeräte vorgesehen sein. Der Handhabungsroboter 1 umfasst einen Tisch 4 und zwei auf dem Tisch 4 angeordnete Roboter-Greifarme 6 und 9. Es können auch weitere Greifarme auf dem Tisch 4 angeordnet sein. Der Tisch 4 weist eine ebene Ablagefläche 5 auf, wobei die Höhe, in der die Ablagefläche 5 des Tischs 4 angeordnet ist, der üblichen Arbeitshöhe von Labortischen entspricht und vorzugsweise zwischen 80 und 110 cm liegt. Die Ablagefläche 5 kann alternativ auch in zwei oder mehr beabstandete Teilflächen unterteilt sein. Die horizontale Ausdehnung des Tisches 4 und die Anzahl der Greifarme können in Abhängigkeit von der Anzahl der zugeordneten Analysegeräte variieren.

Die Analysegeräte 2A und 2B und der Handhabungsroboter 1 sind ortsfest und beabstandet zueinander derart angeordnet, dass eine begehbare Gasse 8 zwischen dem Tisch 4 des Handhabungsroboters 1 und den Analysegeräten 2A und 2B verbleibt. Diese Gasse 8 ermöglicht einem Bediener 12A den Zugriff auf die Analysegeräte 2A und 2B. Bei den Analysegeräten 2A und 2B handelt es sich beispielsweise um Geräte für die Analysen im Bereich der Immunologie und klinischen Chemie, Geräte für die Hämatologie-Diagnostik und/oder Geräte für eine Gerinnungsanalytik, die von unterschiedlichen Herstellern zur Verfügung gestellt werden.

Ein erster Greifarm 6 weist infolge seiner Positionierung, seines Schwenkbereichs und der Länge seiner Glieder einen ersten Zugriffsbereich 33 derart auf, dass er zur Übergabe von Proben-Behältnissen an die Analysegeräte 2A und 2B beziehungsweise Entgegennahme von den Analysegeräten 2A und 2B die Gasse 8 übergreifen kann. In dem ersten Zugriffsbereich 33 befinden sich somit die Ablagen 3A und 3B der Analysegeräte 2A und 2B zur Übernahme und Übergabe der Proben-Behältnisse. Bei größeren Ausführungsformen können auch mehrere erste Greifarme 6 vorgesehen sein, die denselben oder unterschiedlichen Analysegeräten zugeordnet sein können. Die Zugriffsbereiche der mehreren ersten Greifarme 6 bilden dann zusammen den ersten Zugriffsbereich 33.

Die Ablagefläche 5 des Tisches 4 dient zur Ablage von Behältnissen, insbesondere Röhrchen, die Proben oder Reagenzien enthalten. Diese Behältnisse befinden sich üblicherweise in unterschiedlichen Aufnahmevorrichtungen, die als Probenträger, Trays oder Racks bezeichnet werden. So können beispielsweise mehrere (beispielsweise 5 oder 10) den Analysegeräten 2A oder 2B zuzuführende Proben-Behältnisse in Trays oder Racks mit jeweils einer entsprechenden Anzahl (beispielsweise 5 oder 10) von Aufnahmen eingesetzt werden. Es gibt auch Analysegeräte, denen die Proben-Behältnisse in mehreren Racks zugeführt werden, wobei die mehreren Racks wiederum in einen sogenannten Racktray eingesetzt und gemeinsam zugeführt werden. Die Ablagefläche 5 des Tisches 4 umfasst einen Pufferbereich 24 zur Ablage der in die Analysegeräte 2A und 2B einsetzbaren Probenträger 25 und 26 **(z.B.** Trays oder Racks). Der Pufferbereich 24 liegt im Zugriffsbereich 33 des ersten Greifarms 6 (oder der ersten Greifarme 6). Der erste Greifarm 6 kann die Probenträger 25 oder 26 dort aufnehmen und einer Ablage 3A oder 3B eines der Analysegeräte 2A oder 2B zuführen.

Ein etwa mittig auf dem Tisch 4 angeordneter zweiter Greifarm 9 weist einen zweiten Zugriffsbereich 34 auf, der im Wesentlichen die gesamte Ablagefläche 5 des Tisches 4 abdeckt. Bei anderen Ausführungsformen der in-vitro-diagnostischen LaborAnordnung kann der Handhabungsroboter 1 auch mehrere zweite Greifarme aufweisen, wobei deren Zugriffsbereiche insgesamt den zweiten Zugriffsbereich 34 bilden und die gesamte Oberfläche des Tisches 4 abdecken und darüber hinaus sich auch über die Gasse 8 hinweg erstrecken können, so dass auch die zweiten Greifarme oder ein Teil der zweiten Greifarme Zugriff auf einen Teil der Analysegeräte haben.

Wie in Figur 1 zu erkennen ist, überlappt der zweite Zugriffsbereich 34 den ersten Zugriffsbereich 33 in einem Überlappungsbereich 35. In diesem Überlappungsbereich 35 ist der Pufferbereich 24 angeordnet, so dass sowohl der erste Greifarm 6 als auch der zweite Greifarm 9 Zugriff auf den Pufferbereich 24 haben und somit eine Übergabe von Proben-Behältnissen oder Probenträgern zwischen den beiden Greifarmen ermöglicht wird, indem ein von einem ersten Greifarm dort abgelegtes Proben-Behältnis oder ein dort abgelegter Probenträger von einem zweiten Greifarm aufgenommen werden kann oder umgekehrt. Da der Überlappungsbereich 35 einen wahlweisen Zugriff mehrerer Greifarme auf dort abgelegte Proben-Behältnisse gestattet, ist es möglich, dass von der Steuereinrichtung für einzuplanende Transportaufgaben über dem Tisch flexibel in Abhängigkeit von der Auslastung der Greifarme entschieden werden kann, welcher Greifarm diese durchführt. Diese Flexibilität ermöglicht wiederum einen höheren Gesamtdurchsatz.

Die Ablagefläche 5 des Tisches 4 umfasst einen Probeneingangsbereich 10, in dem Proben-Behältnisse und insbesondere Proben-Behältnisse enthaltende Aufnahmevorrichtungen 11 (d. h. Probenträger, Trays oder Racks) abgelegt werden, welche zu analysierende Proben enthalten. Diese neu eingehenden Behältnisse oder Probenträger 11 mit zu analysierenden Proben können beispielsweise manuell von einer Bedienperson 12B in dem Probeneingangsbereich 10 abgelegt werden. In diesem Fall befindet sich der Probeneingangsbereich 10 vorzugsweise an einem Außenrand der Ablagefläche 5 des Tisches 4 an einer von den Analysegeräten 2A und 2B abgewandten Seite. Bei anderen Ausführungsformen ist es auch denkbar, dass der Transport der eingehenden Proben-Behältnisse zu dem Probeneingangsbereich 10 durch eine Fördervorrichtung (beispielsweise eine Rutsche, ein Förderband oder ein Roboterarm) erfolgt, so dass die Bedienperson 12B nicht an den Tisch 4 heranzutreten braucht. Die in dem Probeneingangsbereich 10 abzustellenden Probenträger 11 können eine vorgegebene Anzahl von Proben-Behältnissen aufnehmen und weisen beispielsweise 25 in einer Matrix von fünf Zeilen und fünf Spalten angeordnete Aufnahmen auf. Bei dem in Figur 1 schematisch dargestellten Ausführungsbeispiel umfasst der Probeneingangsbereich 10 einen Teilbereich zur Aufnahme von Probenträgern 11A für Notfall-Proben, welche bevorzugt zu analysieren sind.

Der Probeneingangsbereich 10 könnte auch zusätzlich eine Vorrichtung (einen sogenannten Schüttgut-Sortierer) enthalten, die aus einem Container, der eine Vielzahl von Proben-Behältnissen unsortiert enthält, Proben-Behältnisse entnimmt, deren Identifikationsinformationen erfasst und die Proben-Behältnisse in Aufnahmeeinrichtungen (Probenträger) einsortiert.

Der Probeneingangsbereich 10 befindet sich im zweiten Zugriffsbereich 34 des zweiten Greifarms 9. Der zweite Greifarm 9 dient somit primär der Handhabung eingehender Proben-Behältnisse, insbesondere dem Entnehmen der Proben-Behältnisse aus den Probenträgern 11, 11A des Probeneingangsbereichs 10, dem Identifizieren der eingehenden Proben-Behältnisse und dem Einsetzen der Proben-Behältnisse in die Probenträger 25 oder 26 für die Beladung der Analysegeräte 2A und 2B, welche sich im Pufferbereich 24 befinden.

Das Identifizieren der eingehenden Proben-Behältnisse umfasst beispielsweise das Scannen eines auf der Oberfläche der Proben-Behältnisse aufgebrachten Barcodes oder auch einer anderen Identifikation (z. B. eines QR-Codes). Zum Scannen ergreift der zweite Greifer 9 ein zu identifizierendes Proben-Behältnis und bringt es in den Scanbereich einer Scanstation 7. Die von der Scanstation 7 erfasste Identifikation wird anschließend überprüft. Dabei kann vorzugsweise zusätzlich zum Identifizieren ein Erkennen eines Füllstands einer Probenflüssigkeit in einem Proben-Behältnis (beispielsweise Röhrchen) und/oder ein Erfassen äußerer Erscheinungsmerkmale des Proben-Behältnisses, wie beispielsweise der Farbe seiner Kappe, vorgesehen sein. Die so aus dem Barcode (oder anderem Code), der Füllstandserfassung und/oder der Erfassung der äußeren Merkmale des Behältnisses gewonnenen Informationen werden beispielsweise mit in einer Datenbank hinterlegten Informationen verglichen. Bei dieser Auswertung der gewonnenen Informationen können fehlerhafte Proben erkannt werden. Außerdem kann geprüft werden, ob für die der Identifikationsinformation entsprechende Probe bereits ein Analyse-Auftrag vorliegt und ob der Auftrag durch die vorhandenen Analysegeräte erledigt werden kann. Die Ablagefläche 5 umfasst einen Fehlerbereich 36 mit einer Aufnahmevorrichtung 36A für Proben enthaltende Behältnisse, für die (noch) kein Auftrag vorliegt, sowie Aufnahmevorrichtungen 36B für fehlerhafte Proben, beispielsweise unzureichend gefüllte Behältnisse oder Behältnisse, bei denen das äußere Erscheinungsbild (z. B. die Kappenfarbe) nicht mit den aus der Identifikationsinformation abgeleiteten Probeninformationen übereinstimmt.

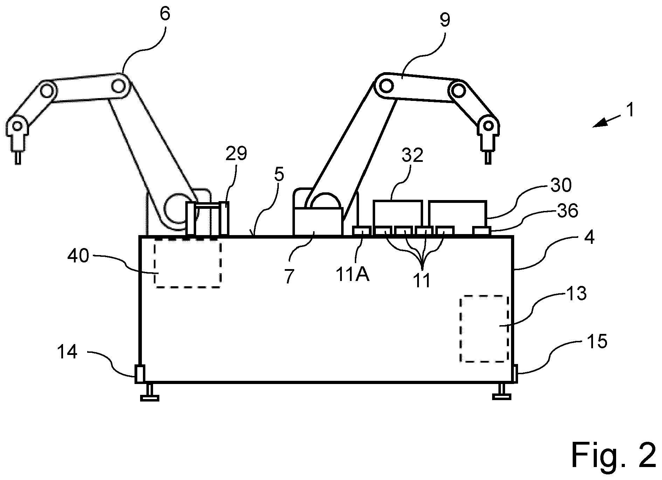

Figur 2 zeigt eine schematische Seitenansicht des in Figur 1 dargestellten Handhabungsroboters 1 mit dem Tisch 4 und den beiden Greifarmen 6 und 9 sowie einigen auf und in dem Tisch 4 angeordneten Vorrichtungen.

Bei dem in den Figuren 1 und 2 dargestellten bevorzugten Ausführungsbeispiel umfasst der Handhabungsroboter 1 weitere Vorrichtungen auf oder in dem Tisch 4, die einer Vorbehandlung (Präanalytik) eingehender Proben vor der Zufuhr zu einem Analysegerät 2A, 2B dienen. Diese Vorrichtungen umfassen eine Drei-Backen-Halterung 39 (oder eine andere Haltevorrichtung) zum Festhalten eines Proben-Behältnisses zum Zwecke des Entfernens seiner Kappe, wobei dieses Entkappen mit Hilfe eines Greif-Werkzeugs des Greifarms 9 ausgeführt werden kann. Dieses Werkzeug ergreift die Kappe und rotiert, so dass die Kappe abgeschraubt oder abgezogen wird.

Ferner ist auf dem Tisch 4 eine Pipettierstation 32 vorgesehen, an der mit Hilfe von Pipetten, die von einem GreifWerkzeug des Greifarms 9 bedient werden können, Teile einer Probe aus einem Proben-Behältnis entnommen und in ein dort bereitgestelltes weiteres Proben-Behältnis eingefüllt werden können.

Damit ein Greifarm 9 die unterschiedlichen Funktionen ausführen kann, ist die Bereitstellung verschiedener Greif-Werkzeuge an einer Greifer-Wechselstation 29 vorgesehen. Hier werden Greif-Werkzeuge für die unterschiedlichen Funktionen, wie beispielsweise das Ergreifen der Proben-Behältnisse, das Entfernen einer Kappe oder das Pipettieren bereitgestellt. Die Greifer-Wechselstation gestattet das automatische Wechseln der verschiedenen Greif-Werkzeuge. Vorzugsweise ist die Greifer-Wechselstation 29 im Überlappungsbereich 35 der beiden Zugriffsbereiche 33 und 34 angeordnet, so dass sie für beide Greifarme 6 und 9 zugreifbar ist.

Die der Präanalytik dienenden Vorrichtungen umfassen ferner eine Zentrifuge 40, die im Tisch 4 unter der Ablagefläche 5 angeordnet und mittels Strichlinie in Figur 2 schematisch dargestellt ist. In Figur 1 ist schematisch eine Aufnahme 38 der Untertisch-Zentrifuge 40 gezeigt, in die ein Zentrifugenbecher, **d. h.** eine Aufnahmevorrichtung für zu zentrifugierende Proben-Behältnisse, eingeführt werden kann. Ferner befindet sich auf der Ablagefläche 5 ein Bereich 37 zur Aufnahme von Zentrifugenbechern, die von den Greifarmen mit Proben-Behältnissen bestückt werden können.

Die Ablagefläche 5 des Tisches 4 umfasst ferner einen Bereich, in dem Aufnahmevorrichtungen 20 (Probenträger) für Kontrollproben abgelegt werden können. Dieser Bereich umfasst ferner eine Kühlvorrichtung 21, die es ermöglicht, die Kontrollproben in einem vorgegebenen Temperaturbereich gekühlt zu lagern. Dies ermöglicht es dem Handhabungsroboter 1, den Analysegeräten 2A und 2B in vorgegebenen Intervallen Kontrollproben zuzuführen und diese Kontrollproben für einen längeren Zeitraum vorzuhalten, so dass in diesem Zeitraum kein Zuführen frischer Kontrollproben in den Probeneingangsbereich 10, **d. h.** kein Eingriff eines Bedieners erforderlich ist.

Die Ablagefläche 5 umfasst ferner einen Archivbereich 27, in dem Aufnahmevorrichtungen für Proben-Behältnisse angeordnet sind. Der Archivbereich 27 umfasst einen gekühlten Bereich mit einer Kühlvorrichtung 23 und einen ungekühlten Bereich. Die Aufnahmevorrichtungen 22 im gekühlten Bereich können zur Aufnahme von Proben-Behältnissen mit UntersuchungsmaterialProben dienen, die an eine externe Laboranordnung ausgegeben werden sollen, **d. h.** bei denen die gewünschte Analyse nicht mit den vorhandenen Analysegeräten 2A und 2B ausführbar ist. Darüber hinaus können in den Aufnahmevorrichtungen 28 des Archivbereichs 27 Proben-Behältnisse abgelegt werden, bei denen bereits die erforderlichen Analysen durchgeführt worden sind.

Mit Hilfe des den zweiten Greifarm 9 aufweisenden Handhabungsroboters 1 kann somit auch eine Handhabung von Proben-Behältnissen durchgeführt werden, die sich an die durchgeführte Analytik anschließt (sogenannte Post-Analytik). Diese umfasst beispielsweise das Wieder-Verkappen von Proben-Behältnissen. Zu diesem Zweck befindet sich auf der Ablagefläche ein Bereich 30 zum Wiederverschließen (Verkappen) von Proben-Behältnissen, der bei dem in Figur 1 dargestellten Ausführungsbeispiel eine Vorrichtung 31 zum Bereitstellen aufzusetzender Kappen (einen sogenannten Bowlfeeder) umfasst.

Eine Steuereinrichtung 13 ist beispielsweise unter dem Tisch 4 des Handhabungsroboters 1 angeordnet, wie dies in Figur 1 und Figur 2 durch eine Strichlinie dargestellt ist. Die Steuereinrichtung 13 umfasst einen oder mehrere Computer und ist über angepasste Schnittstellen mit (nicht in den Figuren dargestellten) Vorrichtungen zum Ansteuern der beiden Greifarme sowie mit der Identifikationseinrichtung 7 und den (ebenfalls nicht dargestellten) Vorrichtungen zur Füllstandserfassung und zum Erfassen der äußeren Merkmale eines Proben-Röhrchens (z. B. Kappenfarbe) gekoppelt. Darüber hinaus ist die Steuereinrichtung 13 mit den Steuereinrichtungen der Analysegeräte sowie mit wenigstens einem Bediener-Terminal gekoppelt, das eine Anzeigevorrichtung (z.B. einen Bildschirm oder Touchscreen) und übliche Eingabevorrichtungen (Tastatur, Maus, Spacheingabevorrichtung, etc.) umfasst. Die Steuereinrichtung 13, die eines oder mehrere Computersysteme umfasst, ist zudem in ein Datenkommunikationsnetzwerk eingebunden, über das sie mit weiteren Datenverarbeitungsanlagen des Labors gekoppelt sein kann.

Die Steuereinrichtung 13 ist mit weiteren auf und unter dem Tisch angeordneten Vorrichtungen, wie beispielsweise der Zentrifuge und der Pipettierstation, und einer Reihe von (nicht in der Zeichnung dargestellten) Sensoreinrichtungen gekoppelt, die den verschiedenen Bereichen der Ablagefläche 5, wie beispielsweise dem Probeneingangsbereich 10, dem Pufferbereich 24, dem Archivbereich 27, den Aufnahmevorrichtungen 20 für Kontrollproben und dem Fehlerbereich 36, zugeordnet sind und die das Vorhandensein der Aufnahmevorrichtungen und/oder deren Belegung mit Proben-Behältnissen und anderen Behältnissen (z.B. für Chemikalien) erfassen können.

Die Steuereinrichtung 13 ist darüber hinaus mit einer Sensoranordnung gekoppelt, die unter anderem am Tisch 4 angeordnete Sensoren 14 und 15 sowie den Sensor 16 umfasst. Mit Hilfe dieser Sensoren 14, 15 und 16 wird der den Handhabungsroboter 1 umgebende Raum, insbesondere die Gasse 8 zwischen dem Tisch 4 und den Analysegeräten 2A, 2B überwacht. Die Sensoren 14 und 15 sind an dem rechteckigen Tisch 4 in Bodennähe an den diagonal einander gegenüberliegenden Eckkanten angeordnet. Der Erfassungsbereich des Sensors 14 ist durch den mit der Strichlinie 17 dargestellten Winkel schematisch dargestellt und der Erfassungsbereich des Sensors 15 durch den mit der Strichlinie 18 dargestellten Winkel. Der aufgrund des Abstands zwischen den Analysegeräten 2A und 2B entstehende Durchgang zwischen den beiden Geräten wird durch den zusätzlichen Sensor 16 mit dem Erfassungswinkel 19 überwacht. Mit den Sensoren 14, 15 und 16 wird sowohl ein Eindringen einer Person 12A oder 12B oder eines anderen Objekts in die Zugriffsbereiche 33 und 34 der Greifarme 6 und 9 als auch die Annäherung der Person oder des Objekts an diese Zugriffsbereiche 33, 34 erfasst. Die die Annäherung von Personen oder Objekten an die Zugriffsbereiche oder das Eindringen von Personen oder Objekten in die Zugriffsbereiche anzeigenden Signale werden von den Sensoren und den gegebenenfalls vorhandenen Sensorsignal-Verarbeitungseinrichtungen an die Steuereinrichtung 13 übermittelt.

Bei der bevorzugten Ausführungsform wird beim Erfassen der Annäherung einer Person oder eines Objekts an einen Zugriffsbereich 33 oder 34 dann, wenn die Annäherung einen vorgegebenen Abstand unterschreitet, der zugehörige Greifarm 6 oder 9 von der Steuereinrichtung 13 veranlasst, seine Greifbewegungen und Schwenkbewegungen zu verlangsamen. Alternativ werden auch beide Greifarme 6 und 9 veranlasst, ihre Greifbewegungen und Schwenkbewegungen zu verlangsamen. Bewegt sich dann die Person oder das Objekt in den Zugriffsbereich hinein, so wird der betroffene Greifarm von der Steuereinrichtung 13 veranlasst, seine Bewegung vollständig einzustellen. Die Bewegung wird solange eingestellt, bis sämtliche Personen oder Objekte den zugehörigen Zugriffsbereich verlassen haben. Das Verlangsamen der Bewegung wird eingestellt, sobald sich keine Personen oder Objekte mehr in der Nähe der Zugriffsbereiche befinden, **d. h.** den vorgegebenen Abstand zu den Zugriffsbereichen unterschreiten.

Bei einer Weiterbildung der erfindungsgemäßen LaborAnordnung sind die Sensoren 14, 15 und 16 und die Steuereinrichtung 13 so konfiguriert, dass die Steuereinrichtung 13 anhand der Signale der Sensoren 14, 15 und 16 ferner ermittelt, in welche Richtung und mit welcher Geschwindigkeit sich die erfassten Personen oder Objekte bewegen, so dass die Ansteuerung einer verringerten Bewegungsgeschwindigkeit oder die Einstellung jeglicher Bewegung vorausschauend in Abhängigkeit von den Bewegungen der Objekte vorgenommen werden können.

## Patentansprüche

1. In-vitro-diagnostische Labor-Anordnung mit wenigstens zwei Analysegeräten (2A, 2B) und einem Handhabungsroboter (1) zum Handhaben von Proben und/oder Reagenzien enthaltenden Behältnissen und/oder von Aufnahmevorrichtungen (11, 11A, 20, 22, 25, 26, 28, 36A, 36B) für solche Behältnisse und zur Übergabe der Behältnisse und/oder Aufnahmevorrichtungen an die Analysegeräte (2A, 2B) und Entgegennahme der Behältnisse und/oder Aufnahmevorrichtungen von den Analysegeräten (2A, 2B),
wobei die Analysegeräte (2A, 2B) und der Handhabungsroboter (1) ortsfest und beabstandet voneinander angeordnet sind,
wobei der Handhabungsroboter (1) einen ersten Greifarm (6), eine Steuereinrichtung (13) und eine mit der Steuereinrichtung (13) gekoppelte Identifikationseinrichtung (7) zum Erfassen von Identifikationsinformationen der Behältnisse aufweist,
wobei der Handhabungsroboter (1) einen wenigstens eine Ablagefläche (5) zur Ablage der Behältnisse und/oder Aufnahmevorrichtungen aufweisenden Tisch (4) umfasst, wobei die wenigstens eine Ablagefläche (5) zumindest
- einen Probeneingangsbereich (10) zur Ablage von Proben enthaltenden Behältnissen und/oder Aufnahmevorrichtungen und
- einen Pufferbereich (24) zur Ablage von in die Analysegeräte (2A, 2B) einsetzbaren Aufnahmevorrichtungen (25, 26) für Proben enthaltende Behältnisse umfasst,
wobei zwischen dem Handhabungsroboter (1) und den Analysegeräten (2A, 2B) eine Gasse (8) ausgebildet ist und der erste Greifarm (6) des Handhabungsroboters (1) einen ersten Zugriffsbereich (33) derart aufweist, dass er zur Übergabe von Behältnissen und/oder Aufnahmevorrichtungen an die Analysegeräte (2A, 2B) beziehungsweise zur Entgegennahme von Behältnissen und/oder Aufnahmevorrichtungen von den Analysegeräten (2A, 2B) die Gasse (8) übergreifen kann, wobei die Gasse (8) derart breit ist, dass sich eine Bedienperson (12A) in der Gasse (8) bewegen und dabei manuell Proben und/oder Reagenzien enthaltende Behältnisse und/oder Aufnahmevorrichtungen den Analysegeräten (2A, 2B) zuführen und/oder aus den Analysegeräten (2A, 2B) entnehmen kann,
wobei der Handhabungsroboter (1) wenigstens einen zweiten Greifarm (9) mit einem zweiten Zugriffsbereich (34) aufweist, wobei sich der erste Zugriffsbereich (33) des wenigstens einen ersten Greifarms (6) und der zweite Zugriffsbereich (34) des wenigstens einen zweiten Greifarms (9) in einem Überlappungsbereich (35) über der Ablagefläche (5) des Tisches (4) überlappen, wobei in dem Überlappungsbereich (35) der Pufferbereich (24) angeordnet ist, und wobei der Probeneingangsbereich (10) in dem zweiten Zugriffsbereich (34) angeordnet ist, und
wobei die in-vitro-diagnostische Labor-Anordnung eine Sensoranordnung (14, 15, 16) aufweist, die so ausgebildet ist, dass sie ein Eindringen einer Bedienperson (12A, 12B) oder eines anderen Objekts in die Zugriffsbereiche (33, 34) der Greifarme (6, 9) erfassen und dies anzeigende Sensorsignale an die Steuereinrichtung (13) übermitteln kann, wobei die Steuereinrichtung (13) so ausgebildet ist, dass sie dann, wenn die Sensorsignale ein Eindringen einer Bedienperson (12A, 12B) oder eines anderen Objekts in einen Zugriffsbereich (33, 34) eines Greifarms (6, 9) anzeigen, den zugehörigen Greifarm (6, 9) derart ansteuert, dass er die Bewegung einstellt, solange die Bedienperson (12A, 12B) oder das Objekt seinen zugehörigen Zugriffsbereich (33, 34) nicht verlassen hat.

2. In-vitro-diagnostische Labor-Anordnung nach Anspruch 1, **dadurch gekennzeichnet, dass** die Steuereinrichtung (13) dann, wenn die Sensorsignale ein Eindringen einer Bedienperson (12A, 12B) oder eines anderen Objekts in einen Zugriffsbereich (33, 34) eines Greifarms (6, 9) anzeigen, den oder die übrigen Greifarme (6, 9) derart ansteuert, dass sie ihre Bewegungen verlangsamen, solange sich die Bedienperson (12A, 12B) oder das Objekt noch in wenigstens einem der Zugriffsbereiche (33, 34) befindet.

3. In-vitro-diagnostische Labor-Anordnung nach Anspruch 1 oder 2, **dadurch gekennzeichnet, dass** die Sensoranordnung (14, 15, 16) zusätzlich eine Annäherung einer Bedienperson (12A, 12B) oder eines anderen Objekts an die Zugriffsbereiche (33, 34) der Greifarme (6, 9) erfassen und dies anzeigende Sensorsignale an die Steuereinrichtung (13) übermitteln kann, wobei die Steuereinrichtung (13) dann, wenn die Sensorsignale ein vorgegebenes Maß der Annäherung einer Bedienperson (12A, 12B) oder eines anderen Objekts an einen Zugriffsbereich (33, 34) eines Greifarms (6, 9), aber noch kein Eindringen in einen Zugriffsbereich (33, 34) anzeigen, den zugehörigen Greifarm (6, 9) oder sämtliche Greifarme (6, 9) derart ansteuert, dass sie die Bewegung verlangsamen, bis sich die Bedienperson (12A, 12B) oder das Objekt wieder um einen vorgegebenen Mindestabstand von sämtlichen Zugriffsbereichen (33, 34) entfernt hat.

4. In-vitro-diagnostische Labor-Anordnung nach einem der Ansprüche 1 - 3, **dadurch gekennzeichnet, dass** die Proben Untersuchungsmaterialproben und Kontrollproben umfassen, wobei der Handhabungsroboter (1) wenigstens eine Aufnahmevorrichtung (20) zur Aufnahme der Kontrollproben aufweist, wobei die wenigstens eine Aufnahmevorrichtung (20) zur Aufnahme der Kontrollproben mit einer ersten Kühlvorrichtung (21) gekoppelt ist, so dass die in der wenigstens einen Aufnahmevorrichtung (20) gelagerten Kontrollproben in wenigstens einem vorgegebenen Temperaturbereich gekühlt gelagert werden können.

5. In-vitro-diagnostische Labor-Anordnung nach Anspruch 4, **dadurch gekennzeichnet, dass** die wenigstens eine Aufnahmevorrichtung (20) zur Aufnahme der Kontrollproben mit der erste Kühlvorrichtung (21) auf der Ablagefläche (5) des Tisches (4) angeordnet ist.

6. In-vitro-diagnostische Labor-Anordnung nach einem der Ansprüche 1 - 5, **dadurch gekennzeichnet, dass** der Handhabungsroboter (1) wenigstens eine Aufnahmevorrichtung (22) zur Aufnahme von an eine externe Labor-Anordnung auszugebenden Untersuchungsmaterialproben umfasst, wobei die wenigstens eine Aufnahmevorrichtung (22) zur Aufnahme von auszugebenden Untersuchungsmaterialproben mit einer zweiten Kühlvorrichtung (23) gekoppelt ist, so dass die in der wenigstens einen Aufnahmevorrichtung (22) gelagerten auszugebenden Untersuchungsmaterialproben in wenigstens einem vorgegebenen Temperaturbereich gekühlt gelagert werden können.

7. In-vitro-diagnostische Labor-Anordnung nach Anspruch 6, **dadurch gekennzeichnet, dass** die wenigstens eine Aufnahmevorrichtung (22) zur Aufnahme von auszugebenden Untersuchungsmaterialproben auf der Ablagefläche (5) des Tisches (4) angeordnet ist.

8. In-vitro-diagnostische Labor-Anordnung nach Anspruch 7, **dadurch gekennzeichnet, dass** die wenigstens eine Aufnahmevorrichtung (22) zur Aufnahme von auszugebenden Untersuchungsmaterialproben in einem Archivbereich (27) auf der Ablagefläche (5) des Tisches (4) angeordnet ist, wobei sich der Archivbereich (27) in dem Überlappungsbereich (35) der Zugriffsbereiche (33, 34) des wenigstens einen ersten Greifarms (6) und des wenigstens einen zweiten Greifarms (9) befindet.

9. In-vitro-diagnostische Labor-Anordnung nach einem der Ansprüche 1 - 8, **dadurch gekennzeichnet, dass** auf dem Tisch (4) wenigstens eine von einem Greifarm (6, 9) bedienbare und/oder wenigstens eine autonom arbeitende Pipettierstation (32) angeordnet ist.

10. In-vitro-diagnostische Labor-Anordnung nach Anspruch 9, **dadurch gekennzeichnet, dass** die Ablagefläche (5) des Tisches (4) eine Ablagefläche mit wenigstens einer Aufnahmevorrichtung zur Aufnahme von mittels der Pipettierstation (32) befüllten Behältnissen umfasst, wobei die Aufnahmevorrichtung zur Aufnahme von mittels der Pipettierstation (32) befüllten Behältnissen eine dritte Kühlvorrichtung derart aufweist, dass die in der Aufnahmevorrichtung gelagerten Behältnisse in wenigstens einem vorgegebenen Temperaturbereich gekühlt gelagert werden können.

11. In-vitro-diagnostische Labor-Anordnung nach einem der Ansprüche 1 - 10, **dadurch gekennzeichnet, dass** die Identifikationseinrichtung (7) des Handhabungsroboters (1) eine Vorrichtung zum Erfassen von Eigenschaften von Verschlüssen der Behältnisse und/oder zum Erfassen eines Volumens der in den Behältnissen enthaltenen Proben aufweist.

12. In-vitro-diagnostische Labor-Anordnung nach einem der Ansprüche 1 - 11, **dadurch gekennzeichnet, dass** wenigstens einer der Greifarme (6, 9) des Handhabungsroboters (1) mit einer Vorrichtung zum Entfernen von Verschlüssen von den Behältnissen und/oder mit einer Vorrichtung (31) zum Wieder-Aufsetzen von Verschlüssen auf die Behältnisse koppelbar ist.

13. In-vitro-diagnostische Labor-Anordnung nach Anspruch 12, **dadurch gekennzeichnet, dass** die Vorrichtung zum Entfernen von Verschlüssen von den Behältnissen und/oder die Vorrichtung (31) zum Wieder-Aufsetzen von Verschlüssen auf die Behältnisse an einem der Greifarme (6, 9) befestigt und mit diesem zu in einer Haltevorrichtung (39) zum Halten von Behältnissen bewegt werden kann, wobei die Haltevorrichtung (39) auf dem Tisch (4) angeordnet ist.

## Claims

1. In vitro diagnostic laboratory arrangement comprising at least two analytical apparatus (2A, 2B) and a handling robot (1) for handling containers containing samples and/or reagents and/or receiving devices (11, 11A, 20, 22, 25, 26, 28, 36A, 36B) for such containers, and for transferring the containers and/or receiving devices to the analytical apparatus (2A, 2B) and receiving the containers and/or receiving devices from the analytical apparatus (2A, 2B),
wherein the analytical apparatus (2A, 2B) and the handling robot (1) are arranged in a stationary manner and spaced apart from one another,
wherein the handling robot (1) has a first gripper arm (6), a control device (13) and an identification device (7) coupled to the control device (13) for acquiring identification information of the containers,
wherein the handling robot (1) comprises a table (4) having at least one deposit surface (5) for depositing the containers and/or receiving devices, the at least one deposit surface (5) comprising at least
- a sample input region (10) for depositing containers and/or receiving devices containing samples, and
- a buffer region (24) for depositing receiving devices (25, 26), insertable into the analytical apparatus (2A, 2B), for containers containing samples,
wherein an aisle (8) is formed between the handling robot (1) and the analytical apparatus (2A, 2B), and the first gripper arm (6) of the handling robot (1) has a first access region (33) such that it can reach across the aisle (8) for transferring containers and/or receiving devices to the analytical apparatus (2A, 2B) or for receiving containers and/or receiving devices from the analytical apparatus (2A, 2B), the aisle (8) being wide enough that an operator (12A) can move within the aisle (8) and, while doing so, manually supply containers and/or receiving devices containing samples and/or reagents to the analytical apparatus (2A, 2B) and/or remove them from the analytical apparatus (2A, 2B),
wherein the handling robot (1) has at least one second gripper arm (9) having a second access region (34), wherein the first access region (33) of the at least one first gripper arm (6) and the second access region (34) of the at least one second gripper arm (9) overlap in an overlap region (35) above the deposit surface (5) of the table (4), the buffer region (24) being arranged in the overlap region (35), and the sample input region (10) being arranged in the second access region (34), and
wherein the in vitro diagnostic laboratory arrangement has a sensor arrangement (14, 15, 16) which is designed such that it can detect an intrusion of an operator (12A, 12B) or of another object into the access regions (33, 34) of the gripper arms (6, 9) and transmit sensor signals indicative thereof to the control device (13), wherein the control device (13) is designed such that, when the sensor signals indicate an intrusion of an operator (12A, 12B) or of another object into an access region (33, 34) of a gripper arm (6, 9), it actuates the associated gripper arm (6, 9) such that it stops its movement for as long as the operator (12A, 12B) or the object has not left its associated access region (33, 34).

2. In vitro diagnostic laboratory arrangement according to claim 1, **characterized in that** the control device (13), when the sensor signals indicate an intrusion of an operator (12A, 12B) or of another object into an access region (33, 34) of a gripper arm (6, 9), actuates the other gripper arm or arms (6, 9) such that they slow down their movements for as long as the operator (12A, 12B) or the object is still located in at least one of the access regions (33, 34).

3. In vitro diagnostic laboratory arrangement according to claim 1 or 2, **characterized in that** the sensor arrangement (14, 15, 16) is additionally able to detect an approach of an operator (12A, 12B) or of another object to the access regions (33, 34) of the gripper arms (6, 9) and to transmit sensor signals indicative thereof to the control device (13), wherein the control device (13), when the sensor signals indicate a predetermined degree of approach of an operator (12A, 12B) or of another object to an access region (33, 34) of a gripper arm (6, 9), but not yet an intrusion into an access region (33, 34), actuates the associated gripper arm (6, 9) or all of the gripper arms (6, 9) such that they slow down their movement until the operator (12A, 12B) or the object has moved away again from all of the access regions (33, 34) by a predetermined minimum distance.

4. In vitro diagnostic laboratory arrangement according to any one of claims 1 to 3, **characterized in that** the samples comprise analysis material samples and control samples, wherein the handling robot (1) has at least one receiving device (20) for receiving the control samples, the at least one receiving device (20) for receiving the control samples being coupled to a first cooling device (21), such that the control samples stored in the at least one receiving device (20) can be stored in a cooled state within at least one predetermined temperature range.

5. In vitro diagnostic laboratory arrangement according to claim 4, **characterized in that** the at least one receiving device (20) for receiving the control samples, together with the first cooling device (21), is arranged on the deposit surface (5) of the table (4).

6. In vitro diagnostic laboratory arrangement according to any one of claims 1 to 5, **characterized in that** the handling robot (1) comprises at least one receiving device (22) for receiving analysis material samples to be output to an external laboratory arrangement, the at least one receiving device (22) for receiving analysis material samples to be output being coupled to a second cooling device (23), such that the analysis material samples to be output stored in the at least one receiving device (22) can be stored in a cooled state within at least one predetermined temperature range.

7. In vitro diagnostic laboratory arrangement according to claim 6, **characterized in that** the at least one receiving device (22) for receiving analysis material samples to be output is arranged on the deposit surface (5) of the table (4).

8. In vitro diagnostic laboratory arrangement according to claim 7, **characterized in that** the at least one receiving device (22) for receiving analysis material samples to be output is arranged in an archive region (27) on the deposit surface (5) of the table (4), the archive region (27) being located in the overlap region (35) of the access regions (33, 34) of the at least one first gripper arm (6) and of the at least one second gripper arm (9).

9. In vitro diagnostic laboratory arrangement according to any one of claims 1 to 8, **characterized in that** at least one pipetting station (32) operable by a gripper arm (6, 9) and/or at least one autonomously operating pipetting station (32) is arranged on the table (4).

10. In vitro diagnostic laboratory arrangement according to claim 9, **characterized in that** the deposit surface (5) of the table (4) comprises a deposit surface with at least one receiving device for receiving containers filled by means of the pipetting station (32), the receiving device for receiving containers filled by means of the pipetting station (32) having a third cooling device such that the containers stored in the receiving device can be stored in a cooled state within at least one predetermined temperature range.

11. In vitro diagnostic laboratory arrangement according to any one of claims 1 to 10, **characterized in that** the identification device (7) of the handling robot (1) has a device for detecting properties of closures of the containers and/or for detecting a volume of the samples contained in the containers.

12. In vitro diagnostic laboratory arrangement according to any one of claims 1 to 11, **characterized in that** at least one of the gripper arms (6, 9) of the handling robot (1) is couplable to a device for removing closures from the containers and/or to a device (31) for re-fitting closures onto the containers.

13. In vitro diagnostic laboratory arrangement according to claim 12, **characterized in that** the device for removing closures from the containers and/or the device (31) for re-fitting closures onto the containers can be fastened to one of the gripper arms (6, 9) and moved therewith to a holding device (39) for holding containers, the holding device (39) being arranged on the table (4).

## Revendications

1. Ensemble de laboratoire de diagnostic in vitro comprenant au moins deux appareils d'analyse (2A, 2B) et un robot manipulateur (1) destiné à manipuler des récipients contenant des échantillons et/ou des réactifs et/ou des dispositifs de réception (11, 11A, 20, 22, 25, 26, 28, 36A, 36B) pour de tels récipients, ainsi qu'au transfert des récipients et/ou des dispositifs de réception vers les appareils d'analyse (2A, 2B) et à la réception des récipients et/ou des dispositifs de réception en provenance des appareils d'analyse (2A, 2B),
dans lequel les appareils d'analyse (2A, 2B) et le robot manipulateur (1) sont disposés de manière fixe et espacée l'un de l'autre,
dans lequel le robot manipulateur (1) comporte un premier bras de préhension (6), un dispositif de commande (13) et un dispositif d'identification (7) couplé au dispositif de commande (13) pour la saisie d'informations d'identification des récipients,
dans lequel le robot manipulateur (1) comprend une table (4) comportant au moins une surface de dépôt (5) pour le dépôt des récipients et/ou des dispositifs de réception, ladite au moins une surface de dépôt (5) comprenant au moins
- une zone d'entrée d'échantillons (10) pour le dépôt de récipients et/ou de dispositifs de réception contenant des échantillons, et
- une zone tampon (24) pour le dépôt de dispositifs de réception (25, 26), pouvant être insérés dans les appareils d'analyse (2A, 2B), pour des récipients contenant des échantillons,
dans lequel une allée (8) est formée entre le robot manipulateur (1) et les appareils d'analyse (2A, 2B), et le premier bras de préhension (6) du robot manipulateur (1) présente une première zone d'accès (33) telle qu'il peut franchir l'allée (8) pour transférer des récipients et/ou des dispositifs de réception vers les appareils d'analyse (2A, 2B), respectivement pour recevoir des récipients et/ou des dispositifs de réception en provenance des appareils d'analyse (2A, 2B), l'allée (8) étant suffisamment large pour qu'un opérateur (12A) puisse se déplacer dans l'allée (8) et, ce faisant, amener manuellement des récipients et/ou des dispositifs de réception contenant des échantillons et/ou des réactifs aux appareils d'analyse (2A, 2B) et/ou les en retirer,
dans lequel le robot manipulateur (1) comporte au moins un deuxième bras de préhension (9) présentant une deuxième zone d'accès (34), la première zone d'accès (33) de l'au moins un premier bras de préhension (6) et la deuxième zone d'accès (34) de l'au moins un deuxième bras de préhension (9) se chevauchant dans une zone de chevauchement (35) au-dessus de la surface de dépôt (5) de la table (4), la zone tampon (24) étant disposée dans la zone de chevauchement (35), et la zone d'entrée d'échantillons (10) étant disposée dans la deuxième zone d'accès (34), et
dans lequel l'ensemble de laboratoire de diagnostic in vitro comporte un ensemble de capteurs (14, 15, 16) conçu de manière à pouvoir détecter une intrusion d'un opérateur (12A, 12B) ou d'un autre objet dans les zones d'accès (33, 34) des bras de préhension (6, 9) et à transmettre au dispositif de commande (13) des signaux de capteur l'indiquant, le dispositif de commande (13) étant conçu de manière à ce que, lorsque les signaux de capteur indiquent une intrusion d'un opérateur (12A, 12B) ou d'un autre objet dans une zone d'accès (33, 34) d'un bras de préhension (6, 9), il commande le bras de préhension (6, 9) associé de manière à ce qu'il arrête son mouvement tant que l'opérateur (12A, 12B) ou l'objet n'a pas quitté sa zone d'accès (33, 34) associée.

2. Ensemble de laboratoire de diagnostic in vitro selon la revendication 1, **caractérisé en ce que** le dispositif de commande (13), lorsque les signaux de capteur indiquent une intrusion d'un opérateur (12A, 12B) ou d'un autre objet dans une zone d'accès (33, 34) d'un bras de préhension (6, 9), commande le ou les autres bras de préhension (6, 9) de manière à ce qu'ils ralentissent leurs mouvements tant que l'opérateur (12A, 12B) ou l'objet se trouve encore dans au moins l'une des zones d'accès (33, 34).

3. Ensemble de laboratoire de diagnostic in vitro selon la revendication 1 ou 2, **caractérisé en ce que** l'ensemble de capteurs (14, 15, 16) est en outre apte à détecter une approche d'un opérateur (12A, 12B) ou d'un autre objet vers les zones d'accès (33, 34) des bras de préhension (6, 9) et à transmettre au dispositif de commande (13) des signaux de capteur l'indiquant, le dispositif de commande (13), lorsque les signaux de capteur indiquent un degré prédéterminé d'approche d'un opérateur (12A, 12B) ou d'un autre objet vers une zone d'accès (33, 34) d'un bras de préhension (6, 9), mais pas encore une intrusion dans une zone d'accès (33, 34), commandant le bras de préhension (6, 9) associé ou l'ensemble des bras de préhension (6, 9) de manière à ce qu'ils ralentissent leur mouvement jusqu'à ce que l'opérateur (12A, 12B) ou l'objet se soit à nouveau éloigné, d'une distance minimale prédéterminée, de l'ensemble des zones d'accès (33, 34).

4. Ensemble de laboratoire de diagnostic in vitro selon l'une des revendications 1 à 3, **caractérisé en ce que** les échantillons comprennent des échantillons de matériau d'examen et des échantillons de contrôle, le robot manipulateur (1) comportant au moins un dispositif de réception (20) pour la réception des échantillons de contrôle, l'au moins un dispositif de réception (20) pour la réception des échantillons de contrôle étant couplé à un premier dispositif de refroidissement (21), de sorte que les échantillons de contrôle stockés dans l'au moins un dispositif de réception (20) puissent être conservés à l'état refroidi dans au moins une plage de température prédéterminée.

5. Ensemble de laboratoire de diagnostic in vitro selon la revendication 4, **caractérisé en ce que** l'au moins un dispositif de réception (20) pour la réception des échantillons de contrôle, avec le premier dispositif de refroidissement (21), est disposé sur la surface de dépôt (5) de la table (4).

6. Ensemble de laboratoire de diagnostic in vitro selon l'une des revendications 1 à 5, **caractérisé en ce que** le robot manipulateur (1) comprend au moins un dispositif de réception (22) pour la réception d'échantillons de matériau d'examen destinés à être délivrés à un ensemble de laboratoire externe, l'au moins un dispositif de réception (22) pour la réception d'échantillons de matériau d'examen à délivrer étant couplé à un deuxième dispositif de refroidissement (23), de sorte que les échantillons de matériau d'examen à délivrer stockés dans l'au moins un dispositif de réception (22) puissent être conservés à l'état refroidi dans au moins une plage de température prédéterminée.

7. Ensemble de laboratoire de diagnostic in vitro selon la revendication 6, **caractérisé en ce que** l'au moins un dispositif de réception (22) pour la réception d'échantillons de matériau d'examen à délivrer est disposé sur la surface de dépôt (5) de la table (4).

8. Ensemble de laboratoire de diagnostic in vitro selon la revendication 7, **caractérisé en ce que** l'au moins un dispositif de réception (22) pour la réception d'échantillons de matériau d'examen à délivrer est disposé dans une zone d'archivage (27) sur la surface de dépôt (5) de la table (4), la zone d'archivage (27) se trouvant dans la zone de chevauchement (35) des zones d'accès (33, 34) de l'au moins un premier bras de préhension (6) et de l'au moins un deuxième bras de préhension (9).

9. Ensemble de laboratoire de diagnostic in vitro selon l'une des revendications 1 à 8, **caractérisé en ce qu'**au moins un poste de pipetage (32) pouvant être actionné par un bras de préhension (6, 9) et/ou au moins un poste de pipetage (32) fonctionnant de manière autonome est disposé sur la table (4).

10. Ensemble de laboratoire de diagnostic in vitro selon la revendication 9, **caractérisé en ce que** la surface de dépôt (5) de la table (4) comprend une surface de dépôt pourvue d'au moins un dispositif de réception destiné à recevoir des récipients remplis au moyen du poste de pipetage (32), le dispositif de réception destiné à recevoir des récipients remplis au moyen du poste de pipetage (32) comportant un troisième dispositif de refroidissement, de manière à ce que les récipients stockés dans le dispositif de réception puissent être conservés à l'état refroidi dans au moins une plage de température prédéterminée.

11. Ensemble de laboratoire de diagnostic in vitro selon l'une des revendications 1 à 10, **caractérisé en ce que** le dispositif d'identification (7) du robot manipulateur (1) comporte un dispositif destiné à détecter des propriétés de fermetures des récipients et/ou à détecter un volume des échantillons contenus dans les récipients.

12. Ensemble de laboratoire de diagnostic in vitro selon l'une des revendications 1 à 11, **caractérisé en ce qu'**au moins l'un des bras de préhension (6, 9) du robot manipulateur (1) peut être couplé à un dispositif destiné à retirer des fermetures des récipients et/ou à un dispositif (31) destiné à remettre en place des fermetures sur les récipients.

13. Ensemble de laboratoire de diagnostic in vitro selon la revendication 12, **caractérisé en ce que** le dispositif destiné à retirer des fermetures des récipients et/ou le dispositif (31) destiné à remettre en place des fermetures sur les récipients peut être fixé à l'un des bras de préhension (6, 9) et déplacé avec celui-ci vers un dispositif de maintien (39) destiné à maintenir des récipients, le dispositif de maintien (39) étant disposé sur la table (4).
